(19) Europäisches Patentamt / European Patent Office / Office européen des brevets

(11) **EP 2 373 558 B1**

## (12) EUROPEAN PATENT SPECIFICATION

(45) Date of publication and mention
of the grant of the patent:
**17.07.2013 Bulletin 2013/29**

(21) Application number: **09830671.5**

(22) Date of filing: **04.12.2009**

(51) Int Cl.:
*B65G 69/00* (2006.01)    *G01S 5/06* (2006.01)
*G05D 1/02* (2006.01)    *G01S 5/30* (2006.01)
*G01S 13/74* (2006.01)

(86) International application number:
**PCT/SE2009/051374**

(87) International publication number:
**WO 2010/064989 (10.06.2010 Gazette 2010/23)**

(54) **METHOD AND SYSTEM FOR PROVIDING DOCK-ASSIST**

VERFAHREN UND SYSTEM ZUR BEREITSTELLUNG VON ANDOCKHILFE

PROCÉDÉ ET SYSTÈME PERMETTANT DE FOURNIR DE L'ASSISTANCE AU QUAI

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **05.12.2008 SE 0802533**

(43) Date of publication of application:
**12.10.2011 Bulletin 2011/41**

(73) Proprietor: **Datachassi DC AB
553 18 Jönköping (SE)**

(72) Inventors:
• **HILLIGES, Werner
S-560 25 Bottnaryd (SE)**

• **BIRGING, Lars
S-561 36 Huskvarna (SE)**

(74) Representative: **Larsson, Malin
Awapatent AB
Box 1066
251 10 Helsingborg (SE)**

(56) References cited:
EP-A2- 1 760 564    WO-A1-87/02484
WO-A1-2008/027056    WO-A2-02/27347
US-A- 5 299 130    US-A1- 2005 137 784
US-A1- 2005 281 436    US-A1- 2006 028 351
US-A1- 2007 030 169    US-A1- 2007 208 482
US-B1- 6 693 524    US-B1- 6 894 608

## Description

Field of the invention

The present inventive concept generally relates to docking of trucks with load houses. More specifically, the inventive concept relates to methods and a system for providing dock-assist.

Background of the invention

Every day large amounts of cargo are transported by trucks (e.g. lorries, trailer trucks etc), the cargo being loaded and unloaded at cargo terminals. A truck driver is often under a tight schedule and needs to quickly dock the truck with an assigned load house at the cargo terminal.

Conventionally, a terminal guard is responsible of informing drivers of incoming trucks which load house they should dock with. Although the load houses may be provided with printed numbers it may still be difficult for the driver to locate the correct load house from a distance, especially at large terminals. In the prior-art, load houses have been provided with optical indicators to assist the driver in locating the correct load house. However, in busy terminals many trucks may be present in the terminal area simultaneously and consequently many indicator lights may be active at the same time leading to confusion regarding which load house is correct.

Even as the driver has located the correct load house it may be difficult, even for an experienced driver, to reverse the truck into the correct, often narrow docking lane of the load house, and keep the truck on course until successful docking with the load house. It is not uncommon that drivers make wrong maneuvers and end up in parallel docking lanes. Correcting maneuvers are time consuming and causes delays and lost revenues.

US-B-6.693.524 describes the guidance of a truck towards a loading ramp by using a video camera and distance sensors of the truck.

Summary of the invention

A general object of the inventive concept is to provide a method and a system which overcomes or at least reduces the above-mentioned problems.

According to a first aspect there is provided a method for providing dock-assist during backing of a truck towards a predetermined loading location at a cargo area. The method comprises transmitting a first and a second measurement signal from a loading location among a plurality of loading locations, the first and second measurement signals together defining a guiding zone associated with the loading location transmitting the measurement signals, and the first and second measurement signals comprising a signal identity associated with the loading locations transmitting the measurement signals. The method further comprises receiving the first and second measurement signals at the truck, and provided that the signal identity of the received measurement signals corresponds to the predetermined loading location, using the measurement signals for determining the truck position and the truck orientation in relation to the predetermined loading location, wherein the truck position and truck orientation is determined repeatedly during at least a part of the backing.

In the following, the advantages and details of the first aspect will be described in relation to a plurality of load houses. However, many of the advantages and details may also apply to a plurality of loading docks, or a plurality of loading locations along a loading platform or a wharf.

Since the measurement signals comprise a signal identity associated with a load house and the position and orientation of the truck only is determined using measurement signals corresponding to the predetermined load house, it may be ensured that the position and orientation of the truck is determined in relation to the predetermined load house. Signals transmitted from other signal sources than the predetermined load house and received at the truck will not interfere with the position and orientation determination at the truck. Hence, it may be ensured that the truck is guided to the predetermined, i.e. the assigned load house.

By repeatedly determining the position and orientation of the truck in relation to the predetermined load house, the number of wrong maneuvers may be reduced and the truck may safely back towards the load house at a greater speed. The time required for docking may thus be advantageously reduced compared to the prior-art.

Moreover, since the position and orientation of the truck is determined by transmitting measurement signals from the load house and receiving the measurement signals at the truck, the accuracy and reliability is increased compared to conventional echo-based measurements. Echo-based measurements have an inherent uncertainty since there is no sure way of knowing which part of a reflecting object the echo originates from. Neither load houses nor trucks have a well-defined "echo surface". Since the inventive method does not rely on echoes, this uncertainty is overcome.

Thus, according to the inventive dock-assist method, the measurement signals have a first function of identifying a predetermined load house and a second function of enabling a determination of truck position and truck orientation. In other words, the measurement signals have a double-function.

Unless explicitly stated otherwise, the term "truck" will be used interchangeably to refer to a separate truck or to a truck or traction vehicle pulling a trailer.

The signal identity may be any or a group of a specific frequency of the measurement signals, a specific pulse length and/or a specific pulse train, a specific frequency in combination with a specific pulse length and/or a specific pulse train, or some other modulation method known in the art. The signal identity may also be a time identity, i.e. a specific set of time slots during which the load house transmits signals.

According to one embodiment the first and second measurement signals are ultrasonic signals. As ultrasonic signals propagate away from the load house they diverge and thus generate a guiding zone. The truck may thus receive the measurement signals when it is within the guiding zone. Thus, dock-assist may be provided even if the truck is not directly aligned with the load house, e.g. if the truck is outside the docking lane of the predetermined load house.

According to one embodiment, the method further comprises providing timing information to the truck, the timing information indicating the time of transmission of the first ultrasonic measurement signal and the time of transmission of the second ultrasonic measurement signal. In response to receiving the ultrasonic measurement signals at the truck, the time of reception of the first signal and the time of reception of the second signal is determined. The truck position and the truck orientation may then be determined based on the timing information and the times of reception. Especially, the truck position and the truck orientation may be determined based on the differences between the time of transmission of the first and second signals and the time of reception of the first and second signals. The timing information may be provided to the truck in an RF scheduling signal. Alternatively, the timing information may be included in the measurement signals. That is, the first measurement signal comprises information indicating the time of transmission of the first measurement signal and the second measurement signal comprises information indicating the time of transmission of the second measurement signal.

According to one embodiment, there is an overlap between guiding zones associated with adjacent load houses among the plurality of load houses. Since the measurement signals comprise a signal identity associated with each respective load house, the guiding zones may overlap without interfering with other trucks in docking operation with other load houses. In other words, the signal identity enables not only identification of the assigned load house, but also dock-assist during simultaneous docking of a plurality of trucks. Thus, a plurality of trucks may be simultaneously and individually assisted during docking in a reliable way.

According to one embodiment, the method further comprises assigning the predetermined load house to the truck by providing information to the truck associated with the signal identity related to the predetermined load house. The information enables the receiving truck to distinguish the guiding zone associated with the predetermined load house from guiding zones associated with other load houses. This information may for instance be provided to the truck in connection with the truck entering the cargo area.

According to one embodiment, the transmission of the first and second measurement signals is performed with a rate of repetition being varied in accordance with at least one of the determined truck position and the determined truck orientation. A higher repetition rate implies that measurement signals are transmitted more frequently. This enables the position and orientation of the truck to be determined more frequently. The rate may for example be high during critical parts of the docking, e.g. during the initial backing of the truck into the docking lane of the predetermined load house and during the final part when the truck approaches the dock house. During less critical parts of the docking, the rate may be lowered. Another instance where a high rate may be used is if the orientation of the truck indicates that the truck is not backing towards the predetermined load house.

By limiting the high rate periods, the risk of interfering with other trucks during docking or with other receivers at the cargo area may be further reduced.

According to one embodiment, the method further comprises generating truck guiding data based on the determined truck position and the determined truck orientation. The guiding data may e.g. be used for visualizing the determined position and orientation of the truck in relation to the load house on a display in the driver's cabin or for indicating suitable maneuvers for backing the truck towards the predetermined load house. For example, a visual or audible indicator may be used, instructing the driver to make a left turn, a right turn or slow down etc. The visual indicator may comprise two optical indicators, one left indicator and one right indicator, and the left or right indicator may be activated based on the guiding data. The visual indicator may be provided in the cabin or on the outside of the truck, for example at the rear view mirrors.

The guiding data may also be used to automatically control the truck during docking, completely or partly, by controlling the steering servos and the braking system of the truck.

According to one embodiment, the first and second measurement signals further comprise sequence information, the sequence information distinguishing a measurement signal pair formed by the first and second measurement signals from a subsequent measurement signal pair associated with the same guiding zone. It may thus be ensured that sequentially transmitted measurement signals are received in the correct order at the truck. For example if one signal is blocked during transmission from the load house to the truck and a subsequent signal is not, the received subsequent signal does not cause incorrect measurements. Moreover, use of sequence information makes it possible to filter out measurement signals reflecting off other trucks and objects at the terminal area.

According to one embodiment, the first and second measurement signals are received at a first reception point and a second reception point on the truck. Additionally, the first and second measurement signals may be transmitted from a first transmission point and a second transmission point, respectively, at the load house.

Especially, the truck position and the truck orientation may be determined by measuring a first distance (L1) between the first transmission point and the first reception point, a second distance (L2) between the second transmission point and the second reception point, a third distance (L3) between the first transmission point and the second reception point, and a fourth distance (L4) between the second transmission point and the first reception point.

According to a second aspect, there is provided a system for providing dock-assist at a cargo area comprising a plurality of loading locations, the system comprising a transmitter pair provided at each of the loading locations, each transmitter pair comprising a first transmitter and a second transmitter arranged to transmit a first and a second measurement signal, respectively, wherein the first and second measurement signals together define a guiding zone in front of the associated loading location and comprise a signal identity associated with the loading location. The system further comprises a receiver pair provided on a truck, the receiver pair comprising a first and a second receiver arranged to receive measurement signals from the loading locations, wherein the system being arranged to determine the truck position and the truck orientation using received first and second measurements signals having a signal identity associated with a predetermined loading location among the plurality of loading locations.

The details and advantages discussed in relation to the first aspect apply correspondingly to the second aspect, whereby reference is being made to the above discussion.

According to a third aspect there is provided a method for providing dock-assist by guiding a truck to a loading location among a plurality of loading locations at a cargo area, the method comprising assigning a loading location to the truck by providing identification information to the truck, storing the identification information at the truck, repeatedly transmitting a first and a second measurement signal from the assigned loading location, the first and second measurement signals together defining a guiding zone associated with the loading location transmitting the signals, and the first and second measurement signals comprising a signal identity associated with the assigned loading location, and receiving the first and second measurement signals at the truck, and, provided that the signal identity of received measurement signals corresponds to the stored identification information, using the measurement signals for determining the truck position and the truck orientation in relation to the assigned loading location during docking.

By providing a guiding zone associated with the assigned loading location, the assigned loading location may conveniently be located. Entry into the guiding zone may be detected by receiving the first and second measurement signals. The position of the assigned loading location may then conveniently be determined using the first and second measurement signals.

By comparing a signal identity of received measurement signals to stored identification information, the measurement signals from the assigned loading location may be distinguished from possible measurement signals transmitted from other loading locations at a cargo area. This ensures that the truck is guided to the assigned loading location.

According to one embodiment, the method further comprises providing a backing initiation position and a backing initiation orientation to the truck, the initiation position and the initiation orientation being suitable for initiation of backing towards the assigned loading location. The position and orientation may e.g. be the optimal position established from a plurality of real-world docking operations. Especially, the initiation position may be presented to a driver on a display together with the position and orientation of the truck. The driver may then conveniently maneuver the truck to the initiation position, stop the truck, put in the reverse and start backing towards the loading location. Alternatively, a central unit of the truck may generate guiding data and use the guiding data to automatically control the truck to the initiation position and initiation orientation, completely or partly, by controlling the steering servos, the brakes and the throttle of the truck.

Brief description of the drawings

Fig. 1 illustrates an embodiment of the invention in a terminal area comprising a cargo terminal with a plurality of load houses.
Fig. 2 illustrates an embodiment of the invention and shows a truck docking towards a load house.
Fig. 3 schematically illustrates embodiments of receiver and transmitter units for use in the present invention.
Fig. 4a and b illustrate examples of measurement signals
Fig. 5 illustrates an example of a structure of a measurement signal.
Figs 6a to 6c illustrate an embodiment of the invention and shows how guiding zones are used for secure docking of trucks at load houses.
Fig. 7 illustrates an embodiment of the invention and shows how a truck may be guided to an assigned load house and stopped at a position suitable for starting backing.

Detailed description of the preferred embodiment(s)

In the following section a detailed description of embodiments and applications of the inventive concept will be given with reference to the drawings.

A first embodiment of a system for dock-assist at a cargo area will now be described. The preferred embodiments will be described with reference to a terminal area and a cargo terminal comprising a plurality of load houses. However, the inventive concept is also applicable to a plurality of loading docks, or a plurality of loading locations along a loading platform or a wharf.

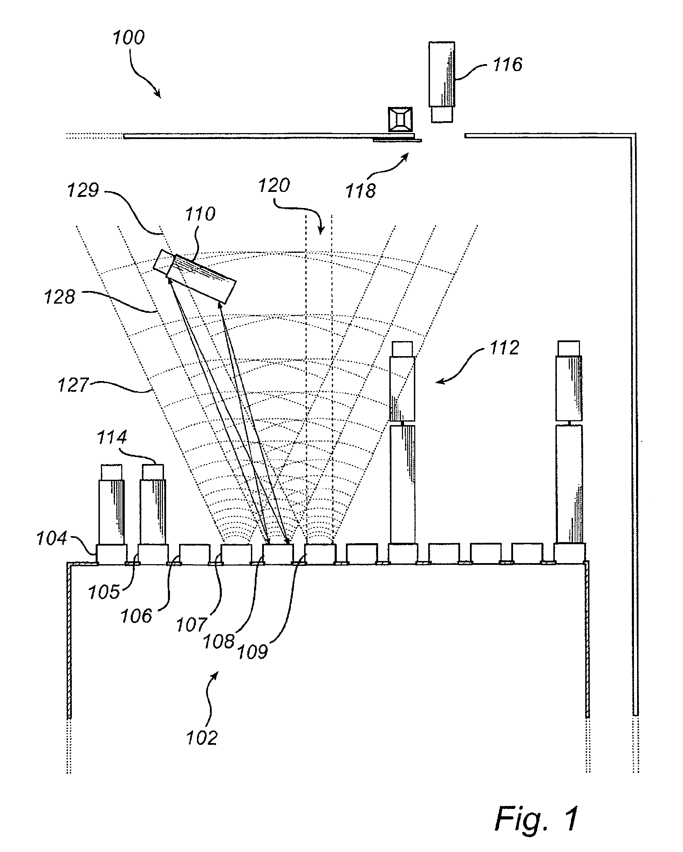

Fig. 1 illustrates a terminal area 100, comprising a cargo terminal 102. The cargo terminal 102 comprises a plurality of load houses 104, 105, 106, etc, which in this embodiment are located along one side of the cargo terminal 102. A plurality of trucks 110, 112, 114, ... are located in the terminal area 100. The truck 110 is illustrated as being in a docking operation backing towards an assigned load house 108, whereas the trucks 112 and 114 are docked with a respective load house. Each load house is separated from the cargo terminal 102 by a gate which may be opened for transferring cargo from/to the cargo terminal 102, to/from the cargo space of a docked truck.

Each load house may be equipped with an adjustable dock leveler (left out in Fig. 1 for simplicity) allowing bridging height differences between the cargo space of a truck and a load house. Moreover, dock bumpers or dock buffers may be provided at the load houses to prevent damage to a truck or cargo terminal 102 due to trucks engaging with the cargo terminal during docking.

The terminal area 100 may comprise a plurality of docking lanes on the ground, each leading to a respective load house. For clarity, only docking lane 120 leading to load house 109 is shown. Also illustrated in Fig. 1 is a truck 116 which is about to enter the terminal area 100 through a terminal gate 118.

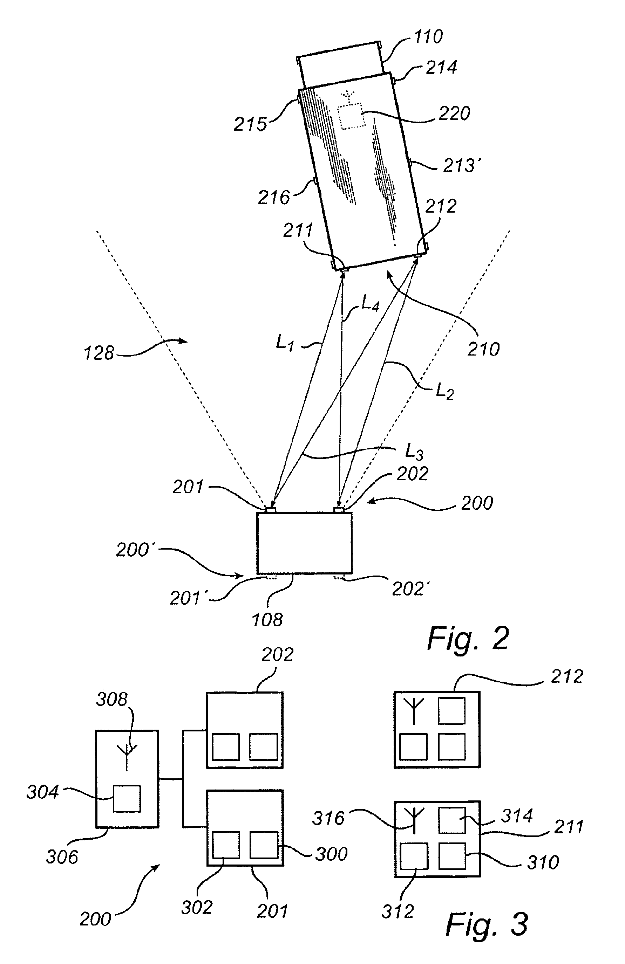

Fig. 2 is a schematic top-view of the area at a load house, e.g. load house 108, of cargo terminal 102 and the truck 110 backing towards the cargo terminal. Although a load house will be described with reference to load house 108, the following is applicable also to the further load houses 104, 105, 106, ... of the cargo terminal 102.

As illustrated in Fig. 2, a transmitter pair 200 comprising a first and a second ultrasonic transmitter unit 201, 202 is provided at load house 108. The first and second ultrasonic transmitter units 201, 202 are spatially separated. More specifically, the transmitter pair 200 may be provided on the load house 108, below load house 108 on or at the dock bumpers at load house 108.

As schematically indicated in Fig. 3, the first ultrasonic transmitter unit 201 comprises an ultrasonic transmitter 300 and a control circuit 302 for controlling the transmitter 300 and encoding information into the measurement signals. The second transmitter unit 202 comprises corresponding components. The first and second transmitter unit 201 and 202 are controlled by a load house control unit 306. The control unit 306 comprises a power source 304 for supplying power to the first and second transmitter units 201, 202. The control unit 306 further comprises a radio transceiver 308 including a timing circuit.

With reference to Fig. 2, truck 110 comprises a plurality of ultrasonic receiver units, commonly referenced as 210. In this embodiment, a first and a second receiver unit 211 and 212 are provided at the rear side of the truck, and a number of receiver units 213 to 216 are provided on opposite right and left sides of the truck. Optionally, receiver units may be provided also on the front side of the truck. The truck 110 may be provided with any number of receiver units, however at least two receiver units. If a truck is provided with only two receiver units, they are preferably provided as rear receiver units 211, 212 at the rear side of the truck. The truck further comprises a central unit 220 comprising a radio transceiver.

As schematically indicated in Fig. 3, the first receiver unit 211 comprises a receiver 310 for receiving ultrasonic signals, and a control circuit 312 for controlling the receiver 310 and processing received measurement signals. The first receiver unit 211 further comprises a power source 314 for supplying power to the components of the first receiver unit 211. The power source 314 may for example be a rechargeable battery. The power source 314 may also supply power to the first receiver unit 211 from the existing infrastructure of the truck 110. The first receiver unit 211 further comprises a radio transceiver 316 including a timing circuit. The receiver unit 211 further comprises a corresponding receiver unit identity, e.g. in the form of a MAC-address, an IP-address or some other identification code. The receiver unit identity may be included in RF signals transmitted from receiver unit 211 by radio transceiver 316, thereby allowing a receiver to identify from which receiver unit a received RF signal was transmitted. The details of receiver unit 211 apply correspondingly to the other receiver units on the truck 110.

The central unit 220 of truck 110 comprises a database comprising entries for each receiver unit of the truck 110. The database comprises each receiver unit identity together with the position of each receiver unit on the truck 110.

In use, the first and second transmitter units 201 and 202 at the load house 108 are arranged to transmit a first ultrasonic measurement signal and a second ultrasonic measurement signal, respectively, in a primarily horizontal direction from the load house 108. The measurment signals are preferably transmitted as pulses or bursts. As the ultrasonic measurement signals propagate away from the load house 108, the measurement signals diverge and thereby define a zone in which receiver equipment on trucks may detect/receive the measurement signals. This zone will be referred to as a "guiding zone". The guiding zone associated with the load house 108 has reference number 128, as indicated in Fig. 2.

In accordance with the first embodiment, a transmitter pair is provided at each load house 104, 105, 106, ... Each transmitter pair is arranged to transmit a first and a second measurement signal comprising a signal identity, wherein each guiding zone is associated with a respective signal identity. The signal identity may be a specific frequency of the measurement signals, a specific pulse length and/or a specific pulse train, a specific frequency in combination with a specific pulse length and/or a specific pulse train, or other modulation techniques. The signal identity thus associates a guiding zone with a load house. If unique signal identities are used, there is a one-to-one correspondence between the signal identities and the load houses at the terminal area 100. However, for load houses further away from each other there may be a re-use of signal identities.

The measurement signals may optionally further comprise sequence information. The sequence information may be encoded by a specific frequency, a specific pulse length and/or a specific pulse train, or other modulation techniques. The sequence information distinguishes measurement signals transmitted sequentially from a given transmitter unit pair. The sequence information may be increased by one for each measurement signal transmitted from the given transmitter unit pair. The sequence information may be recycled after some suitable number of signal transmissions. By including sequence information in the measurement signals, it may be ensured that sequentially transmitted measurement signals are received in the correct order at the truck. For example if one signal is blocked during transmission from the load house to the truck and a subsequent signal is not, the received subsequent signal does not cause incorrect measurements. Moreover, use of sequence information makes it possible to filter out measurement signals reflecting off other trucks and objects at the terminal area. For example, if two measurement signals having non-sequential sequence information are sequentially received the received measurement signals may be discarded. Optionally, a measurement signal pair comprising a first and a second measurement signal may comprise the same sequence information. If a received second measurement signal comprises sequence information being different from the sequence information of a previously received first measurement signal it is determined that the first and second measurement signals do not constitute a measurement signal pair. In response to such a determination, the first and second measurement signals may be discarded.

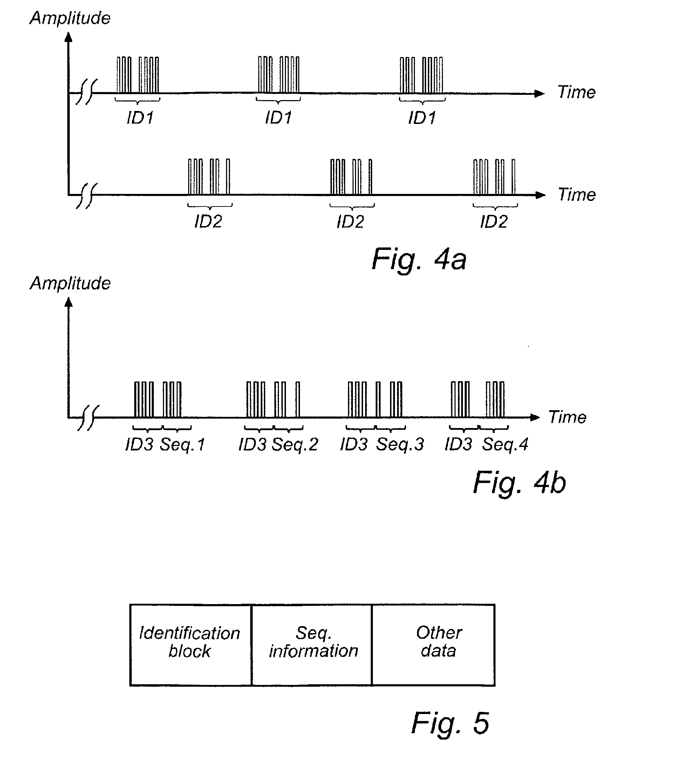

Figs 4 a and b illustrate a few exemplary measurement signals comprising a signal identity and sequence information. By transmitting measurement signals in the form of ultrasonic pulse trains of fixed length, signal identity and sequence information may be encoded as bit patterns wherein the presence of a signal pulse in a pulse train denotes a "1" and the absence of a signal pulse denotes a "0". Fig. 4a illustrates a pulse train of a first measurement signal comprising a first signal identity ID1 and a pulse train of a second measurement signal comprising a second signal identity ID2. The pulse train may consist of up to eight pulses. Thus, ID1 is "11101111" and ID2 is "11101101".

A more simple example of signal identities is a specific number of pulses in a pulse train. For example a first signal identity may consist of three consecutive pulses and a second signal identity may consist of four consecutive pulses. Of course, any other numbers of pulses may be used.

Fig. 4b illustrates pulse trains of four subsequent measurement signals transmitted from a transmitter pair. In this case, the first four pulses are used to identify the signal (i.e. identity the load house) and the last four pulses are used to encode sequence information. Since the four pulse trains originate from the same transmitter pair, the first four pulses are identical, i.e. "1110". However, the final four pulses in the pulse trains are different: Seq. 1 "1110", Seq. 2 "1101", Seq. 3 "1011" and Seq. 4 "0111".

It should be noted that this coding scheme only is provided by way of example. Other pulse train lengths than 8 and other ways of including identity information and/or sequence information in the measurement signals may also be used. For example, a signal identity may be a specific frequency and the sequence information may be encoded using pulse trains. To further distinguish the signal identities, each load house may transmit measurement signals having a specific frequency and a specific pulse train or pulse length.

In a more general case, the measurement signals may have a structure as illustrated in Fig. 5, comprising a signal identity block and a sequence information block. The measurement signal may further comprise a data block for providing information other than identity information and sequence information.

As illustrated in Fig. 1, in use the measurement signals transmitted from the transmitter pairs at the load houses 107, 108, 109 define guiding zones 127, 128 and 129, respectively. Thus, each guiding zone is associated with one load house.

Due to the divergent nature of the ultrasonic measurement signals, the adjacent guiding zones 127, 128, 129 overlap partly. However, since the measurement signals defining the guiding zones 127, 128, 129 comprise different signal identities the receiver equipment provided on the trucks may distinguish between the different guiding zones 127, 128, 129. In the following, load houses having guiding zones which overlap will be referred to as adjacent load houses. For example, load houses 127, 128 and 129 are adjacent.

To reduce the risk of interference at a receiver caused by simultaneous reception of measurement signals transmitted from different load houses, each load house may be assigned a specific time slot. In this time slot, only the assigned load house may transmit measurement signals. All other load houses must remain silent, i.e. not transmit measurement signals. A time slot thus associates a measurement signal with a specific load house. A load house may transmit any number of measurement signals in each time slot. The use of time slots is especially advantageous when trucks are docking simultaneously with adjacent load houses, i.e. when there are overlapping guiding zones. The use of time slots minimizes the risk of measurement signals transmitted from a one load house interfering with trucks docking with other load houses.

In more detail, time may be divided into frame units of some given length. Each frame may then be divided into a plurality of time slots. The time slots may be predetermined and fixedly assigned to the load houses of cargo terminal 102. Alternatively, the time slots may be assigned dynamically on demand. For example if docking only is performed at one load house, e.g. load house 107, the transmitter pair at load house 107 is free to transmit measurement signals at any time during each frame, i.e. each frame comprises only one time slot. If a second docking is performed simultaneously at e.g. load house 108, the frames may be divided into two time slots, the first time slot assigned to load house 107 and the second time slot assigned to load house 108. If a third docking is performed simultaneously at e.g. load house 109, the frames may be further divided into three time slots wherein load house 107 may be assigned the first time slot, load house 108 the second time slot, and load house 109 the third time slot etc.

The time required for a measurement signal to travel, i.e. propagate, from a transmitter unit to a receiver unit of a truck is dependent on the distance between the corresponding load house and the truck. For this reason, it is advantageous to provide guard periods between the time slots. During guard times, no measurement signals may be transmitted from any of the load houses. This is to ensure that measurement signals transmitted from a first load house in the end of a first time slot have propagated past any trucks in docking operation before a second load house starts to transmit measurement signals in the subsequent second time slot.

There may be a one-to-one correspondence between the time slots and the load houses at the terminal area 100. However, for load houses further away from each other there may be a re-use of time-slots since load houses not having overlapping guiding zones will not interfere with one another.

The scheduling and assignment of frames and time slots may be performed by a central controller provided at the cargo area 100. For example a load house control unit 306 at one of the load houses may function as a central controller. The scheduling and assignment may e.g. be announced in a RF beacon signal transmitted from the central controller. The beacon signal may also comprise synchronization information allowing the timing circuitries of all transmitter pairs to use the same reference timing.

Optionally, the time slots may be used as signal identities. For example, a truck may be provided with identification information indicating in which time slots the truck should listen for measurement signals. For example, the receivers of the receiver unit on a truck may be gated to only detect measurement signals during the associated time slots and possibly the subsequent guard period. The identification information may be provided in an RF scheduling signal transmitted by radio transceiver 308 of load house unit 306 or some other radio transmitter at the cargo area 100.

The "time slot signal identity" may be combined with other signal identities, i.e. a signal identity may be a combination of a specific time slot and a specific frequency, pulse train or pulse length etc.

It should be noted that the signal identities does not necessarily need to be unique among all signal identities used at the terminal area 100. If two load houses are separated to such an extent that their respective guiding zones do not overlap, they may share the same signal identity without causing problems for a receiver.

Returning to Fig. 2, in use the receiver units 210 of the truck 110 are arranged to receive ultrasonic measurement signals during the docking operation. For example, receiver 310 of the first receiver unit 211 converts a received ultrasonic measurement signal into a corresponding electrical signal. In accordance with the first embodiment, the control circuit 312 is arranged to respond only to measurement signals having a specific signal identity. The control circuit 312 compares the signal identity of the electrical signal to stored identification information. Depending on the type of signal identity used, the control circuit 312 may for example compare the bit pattern of the received signal to a stored bit pattern, compare the frequency of the received signal to a stored frequency value, or determine whether the measurement signal was received in an assigned time slot. If there is a match, further processing may be applied using the measurement signal and the measurement signal may be used for determining the position and orientation of the truck. If there is no match, the received measurement signal is ignored.

The distance between a transmitter and a receiver may be measured by transmitting a measurement signal from the transmitter and determining the time taken for the measurement signal to reach the receiver, and multiplying the time with the propagation speed of the measurement signal.

More specifically and as an example, the distance may be determined as follows. An RF communication channel is established between the radio transceiver 308 of the load house unit 306 and the truck 110 and an RF timing signal is transmitted from radio transceiver 308 of load house unit 306. The timing signal is received by the two RF transceivers of the first and second receiver units 211 and 212 on the truck. The timing signal informs the two receiver units 211, 212 that a first measurement signal will be transmitted from the first transmitter unit 201 at a time T1 and that a second measurement signal will be transmitted from the second transmitter unit 202 at a later time T2. The timing signal may further comprise a reference timing allowing the timing circuitries of the receiver units 211 and 212 to synchronize with the timing circuitry of the radio transceiver 308 of the load house unit 306. This operation may be performed repeatedly.

At T1, the first transmitter unit 201 transmits a first measurement signal comprising a signal identity corresponding to the load house and the timing circuitries of the receiver units 211 and 212 are started. When the first measurement signal is received by the first receiver unit 211 the signal identity of the first measurement signal is matched against the stored identification information. If the signal identity and the stored identification information do not match, the received measurement signal is ignored. If there is a match, the time of reception is registered. The time taken for the first measurement signal to propagate between the first transmitter unit 201 and the first receiver unit 211 is then given by the difference between the time of reception of the measurement signal and T1. Correspondingly the time taken for the first measurement signal to propagate between the first transmitter unit 201 and the second receiver unit 212 may be determined.

At time T2, this process is repeated wherein the times taken for the second measurement signal to propagate between the second transmitter unit 202 and the first and second receiver units 211 and 212 are determined.

Since the RF timing signal propagates at the speed of light it will, compared to the ultrasonic measurement signals, reach the truck almost instantaneously. Thus, the value of T1 may be zero with only little loss of accuracy. To prevent the first and second measurement signals from interfering at the receiver units, they should preferably be transmitted with some time separation.

In case the first and second measurement signals are pulse trains, T1 and T2 may indicate for example the time of transmission of the first pulse in each pulse train. In that case the propagation time between a transmitter and a receiver is determined as the difference between T1 and the time at which the first pulse of a pulse train is received. Alternatively, T1 and T2 may indicate for example the timing of the last pulse in each pulse train. In that case the propagation time between a transmitter and a receiver is determined as the difference between T1 and the time at which the last pulse of a pulse train is received.

One RF scheduling signal may be transmitted for each measurement occasion. Alternatively, the scheduling signal may schedule transmission of a plurality of measurement pulses in advance.

The transmission rate of the first and second measurement signals may be varied in accordance with any of the truck position and the truck orientation. The rate may varied during the different stages of the docking. For example, during high rate periods, the transmission of the first and second transmission may be repeated at a rate of 40 Hz. During low-rate periods the rate may be lowered.

The determined propagation times are transmitted from the receiver units 211 and 212 via their respective radio transceivers to the central unit 220 of truck 110. The propagation times for the first and second measurement signals are transmitted from each receiver units 211 and 212 together with the respective receiver unit identity, allowing the central unit 220 to associate the propagation times with the receiver unit having received the measurement signals. Optionally, the data from each receiver unit may be relayed to the central unit 220 via other, intermediate receiver units, wherein the receiver units act as RF network nodes. According to this option, the data thus hops from one node to the next node until it reaches the central unit 220. This enables reliable transmission of data from all receiver units at reduced RF signal strengths.

As the propagation times are received by the central unit 220, the central unit 220 determines four distances L1 to L4 by multiplying the received propagation times by the propagation speed of the measurement signals, where L1 is the distance between the first transmitter unit 201 and the first receiver unit 211, L2 is the distance between the second transmitter unit 202 and the second receiver unit 212, L3 is the distance between the first transmitter unit 201 and the second receiver unit 212, and L4 is the distance between the second transmitter unit and the first receiver unit 211.

As illustrated in Fig. 2, the four distances L1, L2, L3 and L4 together with the positions of the transmitter units at the load house and positions of the two receiving receiver units on the truck unambiguously determines both the position and orientation of truck 110 in relation to the transmitter pair 200, i.e. in relation to the load house 108.

In case a truck comprises a traction vehicle and a trailer and the two receiving receiver units are provided on the rear of the trailer, the determined orientation relates to the orientation of the trailer.

In the present context, the term "truck position" is to be interpreted as a two-dimensional determination of the truck's location in relation to the load house, whereas the term "truck orientation" is to be interpreted as an determination of the actual direction/angle of the truck, e.g. in relation to a geometrical line extending perpendicularly from the load house.

In some cases, there may be objects protruding from a load house, e.g. the dock leveler may extend some small distance into the space in front of the load house, or the load house may extend in front of the transmitter pair. Specifically, objects may protrude beyond a vertical plane in which the transmitter pair is provided. Consequently, if the position of a backing truck is determined in relation to the transmitter pair there is a risk of collision between the backing truck and the protruding objects. This problem may be overcome by providing a horizontal offset distance to the truck, the offset corresponding to the horizontal distance between the vertical plane of the transmitter pair and the outermost point of the protruding object. The truck may then determine the position in relation to (e.g. the distance to) the protruding object and the truck may safely back towards the load house without any risk of collision during docking. Fig. 2 illustrates at reference numerals 201' and 202' a pair 200' of such offset transmitters, as an alternative to the transmitters 201 and 202 in Fig. 2, wherein the load house extends in front of the transmitter pair 200'. This arrangement prevents a docking truck to collide with the transmitter pair 200' and thus reduces the risk of damage being caused to the transmitter pair 200'. An offset value may e.g. be transmitted to the truck in the RF synchronization signal, together with the identification information, coded into the measurement signals (e.g. in the "Other data" block illustrated in Fig. 5), or manually entered by the driver into the central unit of the truck based on information received at the terminal gate.

In some cases, the receivers units of a truck and the transmitter pair of a load house may be provided at different distances above ground, i.e. at different levels. In that case, the distances L1, L2, L3 and L4 will each correspond to a hypotenuse of a triangle whose base is the horizontal distance between a transmitter unit and a receiver unit and whose height is the difference between the level of the transmitter unit and the level of the receiver unit. By providing the level of the transmitter pair to the truck, different levels may be computationally compensated for. The level of the transmitter pair may e.g. be transmitted to the truck in the RF synchronization signal, together with the identification information, coded into the measurement signals (e.g. in the "Other data" block illustrated in Fig. 5), or manually entered by the driver into the central unit of the truck based on information received at terminal gate 118.

The central unit may then determine the distances L1, L2, L3 and L4 as have been previously described. The central unit may then calculate the corresponding horizontal distance using the difference between the transmitter height and the receiver height. The horizontal distance may e.g. be calculated using the Pythagorean theorem.

The propagation speed of the measurement signal is temperature dependent. To increase the accuracy of the measurements, the truck may include a thermometer for monitoring the ambient temperature and compensate the measured values in accordance with the measured temperature.

In the illustrated embodiment, the truck 110 comprises more than two receiver units 210. Thereby, as an optional feature, the same measurement signals may be received by more than two receiver units. In that case the position and orientation of the truck 110 may be determined using the measurement signals received at any pair of receiver units having received the same measurement signals. More specifically, propagation times may be transmitted from all receiver units having received measurement signals to the central unit 220. The central unit 220 may then determine the position and orientation of the truck 110 using propagation times from any of the receiver units. The central unit may select the two receiver units based on a criterion such as signal strength, which sides of the truck 110 the receiver units are provided on, the spatial separation of the receiver units etc. Optionally, the central unit 220 may determine the truck position and truck orientation based on propagation times received from more than two receiver units, wherein redundancy is achieved. During a docking operation, different receiver units of the truck 110 may be used over time to determine the truck position and the truck orientation. Thus the utilization of the receiver units may change dynamically during the docking operation.

To enable RF communication between the load house 108 and the truck 110, an RF communication channel may be established between the truck 110 and the radio transceiver of the load house unit at the load house 108. The RF communication channel may be established between the radio transceiver at the load house 108 and the radio transceiver of the central unit 220. The central unit 220 may then forward received information to the receiver units of the truck 110 via the radio transceivers of the receiver units Alternatively or additionally, the RF communication channel may be established between the radio transceiver at the load house 108 and the RF transceivers of the receiver units 210 of the truck 110.

Information may be communicated on the RF communication channel in the form of data packets comprising e.g. a header portion with a source and destination identifier (for example in the form of a MAC-adress, IP-address) and a data portion for carrying the information.

The RF communication channel may be used to transmit the RF synchronization signals for synchronizing the timing circuits of the receiver units of the truck 110 with the timing circuit of the load house unit. The RF communication channel may also be used to transmit timing information for the first and second measurement signals.

A unique RF communication channel may be established between each truck and assigned load house. Alternatively, all trucks and load houses may transmit on/listen to a common RF channel wherein all signals directed to a specific destination comprise a destination identifier allowing a receiver to determine if the transmission is directed to itself.

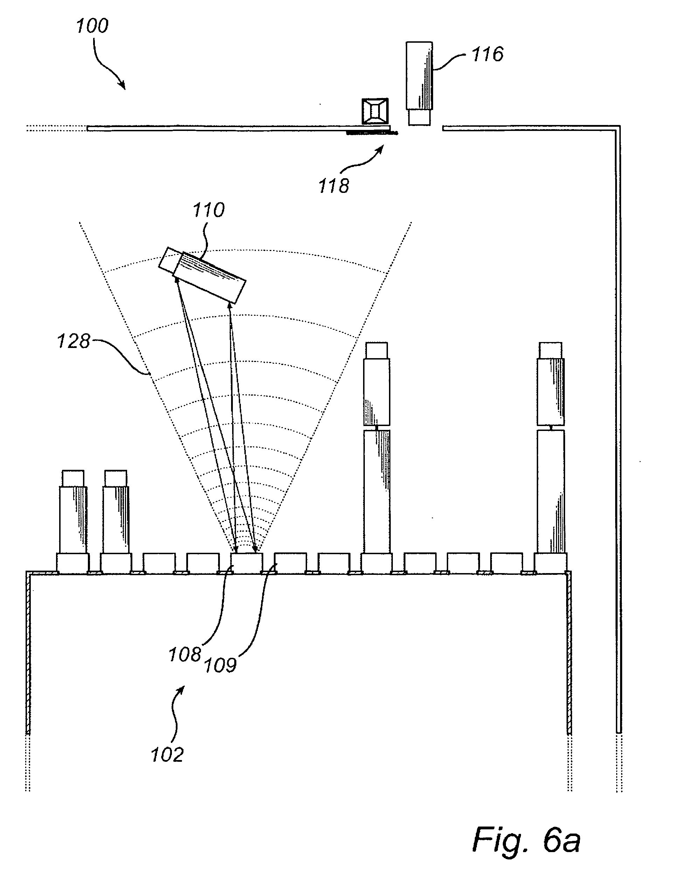

With reference to Figs 6a-c, a docking procedure in accordance with the first embodiment will be described.

In Fig. 6a, the truck 110 has entered the terminal area 100 through terminal gate 118. Upon entering the terminal area 100, truck 110 has been assigned e.g. load house 108. Optionally, such assignment may be done at a different time also. Load house 110 may be assigned by providing identification information to the truck 110, the identification information enabling the receiver equipment of the truck 110 to identify measurement signals transmitted from the assigned load house 108. In this embodiment, in connection with the assignment of the load house 108 the associated transmitter pair 200 at the assigned load house 108 is activated and starts to repeatedly transmit its measurement signals from transmitters 201 and 202, defining the guiding zone 128 associated with the assigned load house 208. The measurement signals comprise the signal identity associated with the assigned load house 108.

In the embodiment shown in Fig. 6a, while the truck 110 is driving forward into the guiding zone 128 its receiver units will receive the measurement signals from the load house 208. The receiver unit equipment on the truck verifies that the signal identity of the received measurement signals corresponds to the identification information provided to the truck. The signal information is forwarded to the central unit 220 on the truck and is used for determining the position and orientation of the truck 110 in relation to the load house 108. The truck position and truck orientation in relation to the load house 108 may be presented continuously to the driver on a display during the entire docking procedure. Using the displayed information, the driver may determine that the truck position and the truck orientation is suitable for initiating backing towards load house 108. The driver then stops truck 110 and puts in the reverse for initiating the docking procedure.

As seen in Fig. 6a, the guiding zone 128 diverges and extends outside and beyond the relatively narrow docking lane of load house 108 and into the parallel docking lanes of adjacent load houses. The diverging nature of the guiding zone advantageously allows the docking procedure to be initiated at a truck position well outside the narrow docking lane shown in Fig. 1.

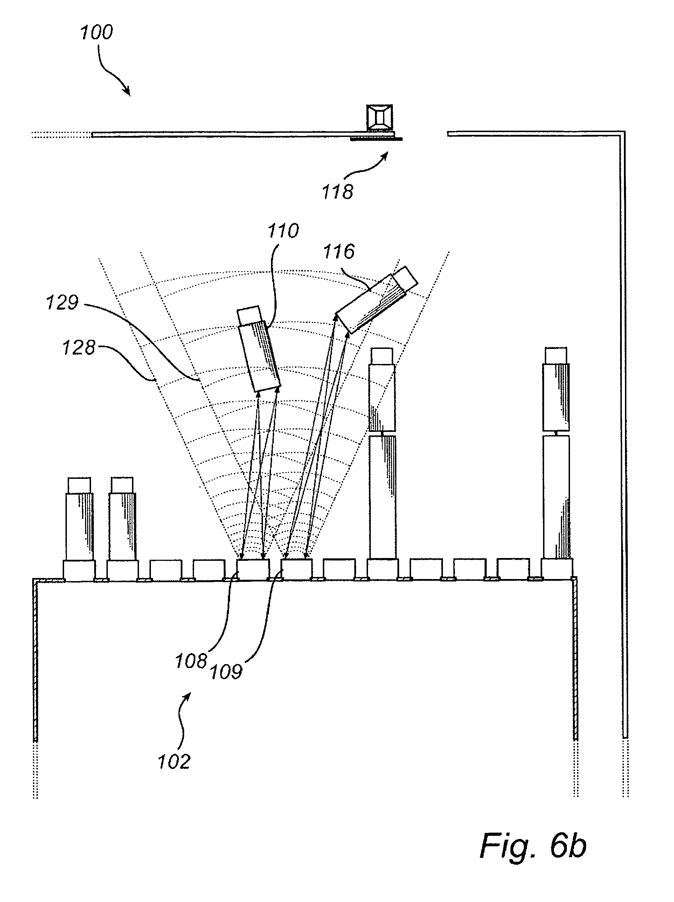

In Fig. 6b, the truck 110 is backing towards its assigned load house 108. Transmitter pair 200 at the assigned load house 108 repeatedly transmits measurement signals and the position and orientation of truck 110 is determined and presented to the driver. In Fig. 6b, an additional truck 116 has entered terminal area 100 and has been assigned the adjacent load house 109. Thus, the transmitter pair provided at load house 109 is transmitting measurement signals for assisting truck 116 to back towards load house 109. The measurement signals transmitted from load house 109 define an adjacent guiding zone 129 which partly overlaps guiding zone 128 of load house 108.

In the situation shown in Fig. 6b, the first truck 110 is located in the overlapping area of the adjacent guiding zones 128 and 129. As a result of providing the different signal identities in the measurement signals forming the guiding zones, the truck 110 will be able to determine its position and orientation based only on received measurement signals having a signal identity corresponding to its assigned load house 108. Thus, the truck 110 is not affected by the presence of the measurement signals forming the adjacent guiding zone 129. In the same manner for the second truck 116 which in the situation in Fig. 6b also is located in the two activated, partly overlapping guiding zones, the second truck 116 will determine its position and orientation in relation to its assigned load house 109 based on only the measurement signals forming the corresponding guiding zone 129.

During backing of the truck, the central unit 220 may monitor the speed of the truck 110. If the speed exceeds a threshold speed a warning may be provided to the driver indicating that the truck 110 is backing towards the load house 108 too quickly. Alternatively or additionally, the central unit 220 may automatically apply the brakes in case the threshold speed is exceeded. The speed may be determined from the speedometer of the truck 110 or based on how quickly the truck position is changing.

In case a measurement signal transmission is scheduled but not received by any of the receiver units 210 on the truck 110, or if one or more measurement signals comprising sequence information not are received subsequently or at all, this indicates that the measurement signal has been blocked by some object (e.g. another truck or a person) in its transmission path. The receiver units 210 may transmit a message to the central unit 220 informing the central unit 220 that a scheduled signal has not been received. If the central unit 220 determines that one or a plurality of consecutive measurement pulses have not been received at one or more receiver units, a warning indication (visual or audible) may be provided to the driver warning him of a possible object between the load house 108 and the truck 110. In response to the warning indication the driver may then choose to brake the truck 110 to prevent an accident or collision. The truck 110 may also be arranged to automatically apply the brakes in response to the warning indication.

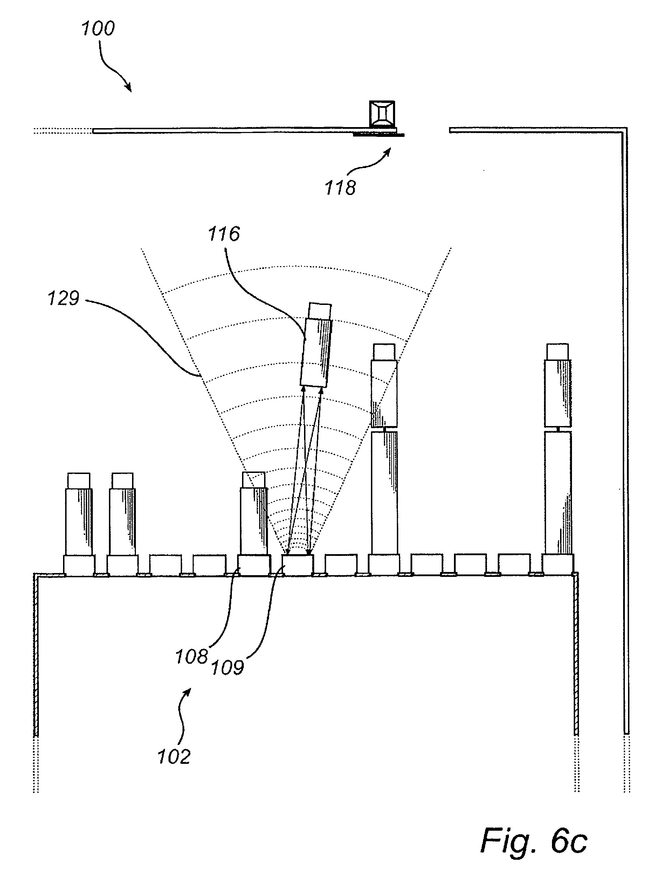

In Fig. 6c, the first truck 110 has successfully docked with its assigned load house 108, the associated first guiding zone 128 has been de-activated and the second truck 116 is docking towards it assigned load house 109 using the measurement signals forming the still activated guiding zone 129 for determining its position and orientation.

In addition to visually presenting the truck position and truck orientation to the driver, the central unit 220 may generate control data and provide driving instructions to the driver based on the control data. For example, a visual or audible indicator may be used, instructing the driver to make a left turn, a right turn or slow down etc. The visual indicator may comprise two optical indicators, one left indicator and one right indicator, and the left or right indicator may be activated based on the guiding data.

In response to entering the guiding zone 108, the central unit 220 may offer the driver to take over the docking. If the driver accepts the offer, the generated control data may be used to directly control the truck 110 by acting on the servomechanism of the truck 110. The driver would then only need to control the throttle and brakes of truck 110. By connecting the central unit 220 to a CAN-bus of the truck, the central unit 220 may also control the speed and brakes of the truck, thus enabling a completely automated docking procedure.

Although in the above, specific functions have been distributed between specific components of the system. However, the invention is not limited to this specific distribution. For example, the matching of signal identity and identification information need not be performed in the receiver units but may instead be performed in the central unit 220 of the truck 110. In that case, the identification information does not need to be provided to all receiver units but may instead be stored only in central unit 220. Moreover, instead of determinating the measurement signal propagation times in the receiver units, the receiver units may simply transmit the reception times to the central unit wherein the central unit may determine the propagation times. This reduces the requirements on the receiver units wherein they may be less complex.

Moreover, some of the functionality of the central unit 220 of the truck 110 may instead by taken over by the load house control unit 306. E.g, the central unit 220 (or the receiver units) may transmit the times of reception of measurement signals and/or the propagation times of the measurement signals through the RF communication channel between the load house control unit 306 and the truck 110. L1, L2, L3, L4 may then be determined in the load house control unit 306. The load house control unit 306 may then return the truck position and truck orientation and/or control data to the truck through the RF communication channel.

A second embodiment of a system for dock-assist at a cargo area will now be described. The second embodiment is similar to the first embodiment wherefore the second embodiment also will be described with reference to Figs 1-6. However, instead of the ultrasonic transmitters (300 in Fig. 3) of the transmitter units 201, 202 and the ultrasonic receivers 310 of the receiver units 210, the transmitter units 201, 202 are provided with electromagnetic (EM) signal transmitters and the receiver units 210 are provided with EM signal receivers. The transmitter may for example be a an optical transmitter, e.g. a laser emitting visible or invisible laser light, and the receiver may be e.g. a photo detector or some other optical detector. Alternatively, the transmitter may be a radar transmitter transmitting signals via a radar antenna and the receiver may be a radar receiver comprising a radar antenna.

In use, the first and second transmitter units 201 and 202 of the transmitter pair 200 transmit first and second EM measurement signals, respectively, in a primarily horizontal direction from the load house such that they together define a guiding zone 128 associated with the load house 108. The measurment signals are preferably transmitted as pulses or bursts. For lasers, the guiding zone may be accomplished using a lens or slit for diverging the laser light. Alternatively, the lasers may be pointed to a respective rotating mirror which scans the laser beam over a sector, thereby defining the guiding zone. For radar signals the guiding zone may be accomplished using an appropriate directional radar antenna (e.g. in the form of a plurality of patch antennas). In the guiding zone, receiver equipment on trucks may detect/receive the EM measurement signals.

In correspondence with the ultrasonic measurement signals of the first embodiment, the EM measurement signals also comprise a signal identity. A transmitter pair is provided at each load house 104, 105, 106, ... and each transmitter pair is arranged to transmit a first and a second measurement signal comprising a specific signal identity. The signal identity thus associates a guiding zone with a load house. The signal identity may be a specific frequency of the measurement signals, a specific polarization, a specific pulse length and/or a specific pulse train, a specific frequency in combination with a specific pulse length and/or a specific pulse train or a specific time slot in a frame as described in connection with the first embodiment, or a combination of a specific frequency and a specific pulse train or pulse length and/or a specific time slot. Other modulation techniques known in the art are also possible. Optionally, the EM measurement signals may further comprise sequence information coded as a specific pulse train, pulse length or coded using other modulation techniques.

In correspondence with the first embodiment, a truck is provided with identification information corresponding to the signal identity associated with the load house assigned to the truck. The identification information allows the receiver units 210 of the truck to distinguish the measurement signals transmitted from the assigned load house from measurement signals transmitted from other load houses.

The distances L1, L2, L3 and L4 may be determined by transmitting first and second measurement signals from the transmitter pair and receiving the signals at two receiver units of a truck.

In more detail, and with reference to Fig. 2, the timing circuits of the receiver units synchronized and matched with the timing circuit of the load house unit 306, the propagation times may be determined in the manner similar to the first embodiment. The timing circuits may e.g. synchronize using a synchronization signal from a GPS satellite or some other common accurate reference. An RF timing signal is transmitted from radio transceiver 308 of load house unit 306. The timing signal is received by the two RF transceivers of the first and second receiver units 211 and 212 on the truck. The timing signal informs the two receiver units 211, 212 that a first EM measurement signal will be transmitted from the first transmitter unit 201 at a time T1 and that a second EM measurement signal will be transmitted from the second transmitter unit 202 at a later time T2.

At T1, the first transmitter unit 201 transmits a first EM measurement signal comprising a signal identity corresponding to the load house 108 and the timing circuitries of the receiver units 211 and 212 are started. When the first EM measurement signal is received by the first receiver unit 211 the signal identity of the first EM measurement signal is matched against the stored identification information. If the signal identity and the stored identification information do not match, the received EM measurement signal is ignored. If there is a match, the time of reception is registered. The time taken for the first EM measurement signal to propagate between the first transmitter unit 201 and the first receiver unit 211 is then given by the difference between the time of reception of the measurement signal and T1. Correspondingly the time taken for the first measurement signal to propagate between the first transmitter unit 201 and the second receiver unit 212 may be determined.

At time T2, this process is repeated, wherein the times taken for the second measurement signal to propagate between the second transmitter unit 202 and the first and second receiver units 211 and 212 are determined.

The distances L1, L2, L3 and L4 may then be determined by multiplying the signal speed (i.e. the speed of light) with the determined propagation times.

In order to reduce the requirements of precise synchronization between the timing circuits of the load house unit 306 and the timing circuits of the receiver units the following alternative approach may be used.

The first transmitter unit 201 transmits a first EM measurement signal. As have already been described, the first EM measurement signal comprises a signal identity corresponding to the load house. The EM receiver of the first receiver unit 211 receives the first measurement signal. In response, the timing circuit of the first receiver unit 211 is started and the receiver of the first receiver unit generates an electrical signal corresponding to the first measurement signal which is transmitted to the control circuit of the first receiver unit. The control circuit 312 performs signal processing on the electrical signal as have been previously described by matching stored identification information with the signal identity of the received signal. After determining that there is a match, the control circuit 312 waits until the timing circuit indicates that a time delay D has passed since the reception of the first EM measurement signal, and then transmits a representation of the electrical signal in the form of a radio signal to the radio transceiver 308 of the load house unit 306 at the load house 108 via radio transceiver 316.

The delay D is a predetermined time delay which is larger than the time required for the processing in the receiver unit, which may be established during testing. Thus, D is so large that the control circuit 312 always will be ready to transmit the radio signal before the timing circuit reaches D.

In response to receiving the radio signal, the control circuit 304 of load house unit 306 determines the time difference between the transmission of the first measurement signal and the reception of the radio signal. This difference will be

$$\Delta T = 2 \cdot L1/c + D,$$

where L1 is the distance between the first transmitter unit 201 and the first receiver unit 211. D is known in advance may have been provided to the load house unit 306 in an earlier transmitted RF signal from the truck. Alternatively it may be appended after the EM measurement signal representation in the radio signal. The control circuit 304 may thus subtract D from the $\Delta T$ and determine L1. This approach reduces the sensitivity to small offsets between the timing circuitries of the receiver unit 211 and the load house unit 306.

This process is then repeated for determining the distance L3 between the first transmitter unit 201 and the second receiver unit 212. The distance L2 between the second transmitter unit 202 and the second receiver unit 212, and the distance L4 between the second transmitter unit 202 and the first receiver unit 211 may be determined correspondingly.

In accordance with a further aspect there is provided a "truck catching" function for guiding a truck to an assigned load house among a plurality of load houses. The catching function may be provided using the transmitter and receiver equipment described above. A load house (e.g. 108) is assigned to the truck 110 by providing identification information to the truck. The identification information is stored at the truck. The transmitter pair at the assigned load house 108 is activated and repeatedly transmits a first and a second measurement signal together defining a guiding zone associated with the load house 108. The truck 110 is driving forward and is listening for the guiding zone of the assigned load house. As the truck 110 enters the guiding zone 128 of the load house 108 the receiver equipment on the truck 110 receives the first and second measurement signals, and, provided that the signal identity of received measurement signals corresponds to the stored identification information, the truck 110 determines its position and orientation in relation to the assigned load house using the measurement signals. Thus, the assigned load house 108 has "caught" the truck 110. The truck position and truck orientation may be presented to the driver on a display together with the assigned load house position. The actual docking with the load house 108 may then be performed as been described above.

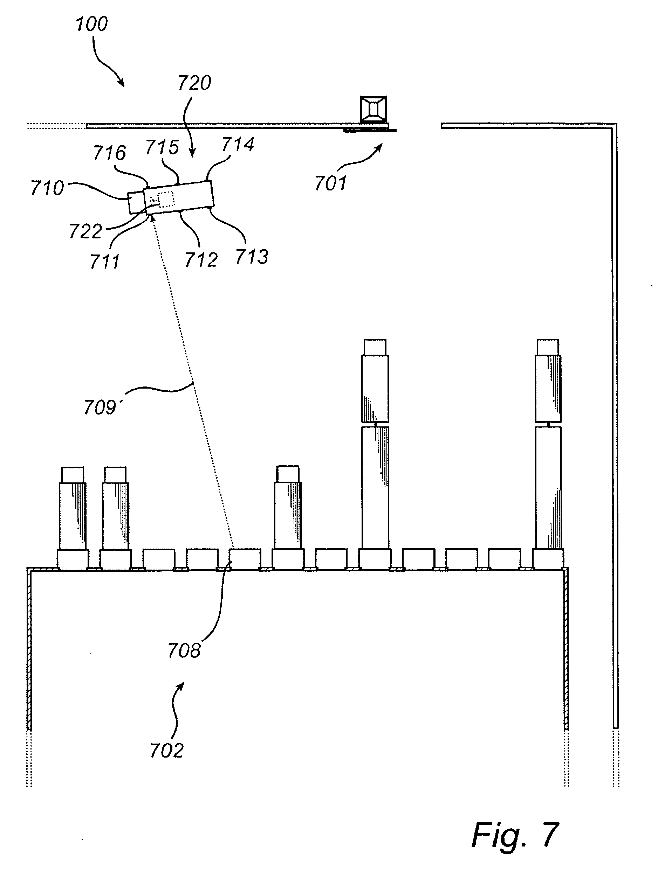

Alternatively, the catching function may be provided by transmitting a dedicated catching beam. With reference to Fig. 7, there is provided a radar transmitter at each load house of the cargo terminal 702. Each radar transmitter may transmit radar signals having a relatively small divergence (e.g. 3°), the radar signals thus define a radar beam. The radar beams are transmitted away from their respective load house. The radar signals transmitted from each load house comprise a signal identity associated with the respective load house. The truck 710 has been assigned a load house 708 by receiving and storing identification information corresponding to the signal identity associated with the assigned load house. The truck 710 may thus distinguish radar signals transmitted from the assigned load house 708 from radar signals transmitted from other load houses by comparing the signal identity of the received radar signals to the stored identification information as have been described in connection with the first and second embodiments.

In Fig. 7, the truck 710 is driving forward and is listening for a radar beam 709' transmitted by radar transmitter 709 provided at the assigned load house 708. The truck 710 is provided with receiver units 711, 712, 713 etc (commonly referred to as 720) comprising radar receivers as have been previously described. The receiver units 720 are at least provided on the left and right sides of the truck 710. The truck 710 further comprises a central unit 722 corresponding to the central unit 220 of the first and second embodiments.

In response to a receiver unit of the truck 710 detecting the beam 709' the truck may be stopped. The truck is thus in line with the assigned load house 708 and may initiate backing towards the load house 708.

Additionally, a gradual catching function may be provided, wherein the receiver units on a side of the truck 710 sequentially detect the radar beam 709'. In response to each sequential detection, the speed of the truck 710 may be reduced. The truck 710 may be stopped as the last receiver unit detects the radar beam 709'. I.e. the rearmost receiver unit 713 on the left (or right) side of the truck 710.

The central unit 722 may provide an indication to the driver of the truck that the radar beam 709' has been detected. The driver may then manually stop the truck 710. Alternatively, the central unit 722 may automatically slow down and stop the truck in response to the receiver units detecting the radar beam 709'.

In case the rearmost receiver unit is provided at a distance from the end of the truck 710, the truck may need to drive some further distance before stopping in order to start backing from a good position. This extra distance may be determined by the central unit 722, which stores the positions of the receiver units on the truck, by indicating to the driver that he should drive the truck a further distance corresponding to the distance between the rearmost receiver unit and the end of the truck side. Alternatively, in case the central unit 722 is controlling the truck 710 the central unit 722 may automatically stop the truck when the extra distance has been covered after the detection of the radar beam 709'.

By catching a truck using a narrow radar beam, the truck 710 may be stopped at a precise location. The radar beam thus enables both catching of a truck and stopping of the truck at a good position for initiating backing towards an assigned load house.

The radar signals may be transmitted in a perpendicular direction from the load houses. Alternatively (as indicated in Fig. 7), the radar signals may be transmitted at another angle corresponding to a better position for initiation of backing towards the assigned load house. A suitable beam angle may be established from a plurality of real-world backing tests.

Optionally, the distance between the truck and the assigned load house may be determined. If the truck is too close to the assigned load house for a successful backing towards the load house to be possible, a warning may be provided to the driver of the truck. The driver may then repeat the load house approach at a greater distance. Additionally, the orientation of the truck in relation to the assigned load house may be determined. If the truck orientation in combination with the distance is such that a successful backing towards the load house is difficult or impossible, a warning may be provided to the driver of the truck. The driver may then repeat the load house approach at a greater distance and at another direction. The distance and orientation may be determined using the radar beam or the first and second measurement signals as have been previously described.

Optionally, the radar transmitters at the load houses and the radar receivers of the receiver units may be replaced with lasers and optical receivers, e.g. photo detectors or other optical detectors.

Optionally, all or some of the receiver units of the above-described embodiments may be incorporated into light units on the truck whereby the receiver units may be powered and controlled using the existing infrastructure of the truck. More specifically, the receiver units on the rear-side of the truck may be incorporated in rear light units and the receiver units on the sides may be incorporated in side-light units. Such side-light units are disclosed in previously filed application WO 2008/121041 As disclosed therein, a truck may be provided with multi-function side-light units comprising RF transmitting and RF receiving means wherein the side-light units forms a wireless communication network on the truck. The communication network provides relaying of sensor data or any other data between the side-light units. Especially, by incorporating the receiver units of truck 110 or 710 into such multi-function side-light units, propagation times determined by the receiver units may be relayed to the central unit 220 or 722 for processing via intermediate light units.

**Claims**

1. A method for providing dock-assist during backing of a truck (110) towards a predetermined loading locatiion (108) at a cargo area (100), comprising:

   transmitting a first (201) and a second (202) measurement signal from a loading location among a plurality of loading locations, said first and second signals the measurement signals together defining a guiding zon (128) associated with the loading location transmitting said measurement signals, and said first and second measurement signals comprising a signal identity associated with the loading location transmitting said measurement signals;
   receiving said first and second measurement signals (211,212) at the truck; and provided that the signal identity of the received measurement signals corresponds to said predetermined loading location, using said measurement signals for determining the truck position and the truck orientation in relation to the predetermined loading location,
wherein the truck position and truck orientation is determined repeatedly during at least a part of said backing.

2. A method as claimed in claim 1, wherein there is an overlap between guiding zones associated with adjacent loading locations among said plurality of loading locations.

3. A method as claimed in any of the preceding claims, further comprising assigning said predetermined loading location to the truck by providing information to the truck associated with the signal identity related to the predetermined loading location.

4. A method as claimed in any of the preceding claims, wherein said transmission of the first and second measurement signals is performed with a rate of repetition being varied in accordance with at least one of the determined truck position and the determined truck orientation.

5. A method as claimed in claim 1, further comprising generating truck guiding data based on the determined truck position and the determined truck orientation.

6. A method as claimed in any of the preceding claims, wherein said first and second measurement signals further comprise sequence information, said sequence information distinguishing a measurement signal pair formed by said first and second measurement signals from a subsequent measurement signal pair associated with the same guiding zone.

7. A method as claimed in any of the preceding claims, wherein said first and second measurement signals are received at a first reception point and a second reception point on said truck.

8. A method as claimed in claim 7, wherein the first and second measurement signals are transmitted from a first transmission point and a second transmission point, respectively, at the loading location.

9. A method as claimed in claim 8, wherein the truck position and the truck orientation is determined by measuring a first distance, L1, between the first transmission point and the first reception point, a second distance, L2, between the second transmission point and the second reception point, a third distance, L3, between the first transmission point and the second reception point, and a fourth distance, L4, between the second transmission point and the first reception point.

10. A method as claimed in any of claims 1-9, wherein each loading location of said plurality of loading locations is a load house.

11. A system for providing dock-assist at a cargo area comprising a plurality of loading locations, said system comprising,
a transmitter pair (200) provided at each of said loading locations, each transmitter pair comprising a first (201) transmitter and a second (202) transmitter arranged to transmit a first and a second measurement signal, respectively,
wherein said first and second measurement signals together define a guiding zone (128) in front of the associated loading location and comprise a signal identity associated with said loading location, and
a receiver pair (211,212) provided on a truck, said receiver pair comprising a first and a second receiver arranged to receive measurement signals from said loading location, wherein the system being arranged to determine the truck position and the truck orientation using received first and second measurements signals having a signal identity associated with a predetermined loading location among said plurality of loading locations.

12. A system as claimed in claim 11, wherein there is an overlap between guiding zones of adjacent loading locations.

13. A system as claimed in any of claims 11 to 12, wherein the truck comprises stored information relating to the signal identity, the information provided to the truck during assignment of a loading location to the truck.

14. A system as claimed in any of claims 11 to 13, further comprising a central unit which is arranged on the truck and which is arranged to generate truck guiding data based on the determined truck position and the determined truck orientation.

15. A system as claimed in any of claims 11 to 14, wherein the truck position and the truck orientation is determined based on a distance L1 between the first transmitter and the first receiver, a distance L2 between the second transmitter and the second receiver, a distance L3 between the first transmitter and the second receiver, and a distance L4 between the second transmitter and the first receiver.

**Patentansprüche**

1. Verfahren zum Bereitstellen von Andockhilfe während des Rückwärtsfahrens eines Lastkraftwagens (Lkw) (110) zu einem zuvor bestimmten Verladeplatz (108) in einem Frachtgutbereich (100), Folgendes umfassend:

   Senden eines ersten (201) und eines zweiten (202) Messsignals von einem Verladeplatz unter mehreren Verladeplätzen, wobei das erste und das zweite Messsignal gemeinsam eine Führungszone (128) definieren, die dem Verladeplatz zugeordnet ist, der die Messsignale sendet, wobei das erste und das zweite Messsignal eine Signalkennung umfassen, die dem Verladeplatz zugeordnet ist, der die Messsignale sendet;
   Empfangen des ersten und des zweiten Messsignals (211, 212) am Lkw; und
   vorausgesetzt, die Signalkennung des empfangenen Messsignals entspricht dem zuvor bestimmten Verladeplatz, Verwenden der Messsignale zum Bestimmen der Lkw-Position und der Lkw-Ausrichtung im Verhältnis zum zuvor bestimmten Verladeplatz,
   wobei die Lkw-Position und die Lkw-Ausrichtung während zumindest eines Teils des Rückwärtsfahrens wiederholt bestimmt werden.

2. Verfahren nach Anspruch 1, wobei sich die Führungszonen, die benachbarten Verladeplätzen unter den mehreren Verladeplätzen zugeordnet sind, überschneiden.

3. Verfahren nach einem der vorhergehenden Ansprüche, ferner das Zuweisen des zuvor bestimmten Verladeplatzes zum Lkw durch Bereitstellen von Informationen für den Lkw umfassend, die der Signalkennung bezüglich des zuvor bestimmten Verladeplatzes zugeordnet sind.

4. Verfahren nach einem der vorhergehenden Ansprüche, wobei das Senden des ersten und des zweiten Messsignals mit einer Wiederholungsrate ausgeführt wird, die gemäß der zuvor bestimmten Lkw-Position und/oder der zuvor bestimmten Lkw-Ausrichtung verändert wird.

5. Verfahren nach Anspruch 1, ferner das Erzeugen von Lkw-Führungsdaten basierend auf der bestimmten Lkw-Position und der bestimmten Lkw-Ausrichtung umfassend.

6. Verfahren nach einem der vorhergehenden Ansprüche, wobei das erste und das zweite Messsignal ferner Abfolgeinformationen umfassen, wobei die Abfolgeinformationen ein Messsignalpaar, das aus dem ersten und dem zweiten Messsignal gebildet ist, von einem nachfolgenden Messsignalpaar abgrenzen, das derselben Führungszone zugeordnet ist.

7. Verfahren nach einem der vorhergehenden Ansprüche, wobei das erste und das zweite Messsignal an einem ersten Empfangspunkt und an einem zweiten Empfangspunkt des Lkws empfangen werden.

8. Verfahren nach Anspruch 7, wobei das erste und das zweite Messsignal von einem ersten Sendepunkt beziehungsweise von einem zweiten Sendepunkt am Verladeplatz aus gesendet werden.

9. Verfahren nach Anspruch 8, wobei die Lkw-Position und die Lkw-Ausrichtung durch Messen einer ersten Entfernung, L1, zwischen dem ersten Sendepunkt und dem ersten Empfangspunkt, einer zweiten Entfernung, L2, zwischen dem zweiten Sendepunkt und dem zweiten Empfangspunkt, einer dritten Entfernung, L3, zwischen dem ersten Sendepunkt und dem zweiten Empfangspunkt und einer vierten Entfernung, L4, zwischen dem zweiten Sendepunkt und dem ersten Empfangspunkt bestimmt werden.

10. Verfahren nach einem der Ansprüche 1 bis 9, wobei jeder Verladeplatz der mehreren Verladeplätze eine Überladebrücke (Loadhouse) ist.

11. System zum Bereitstellen von Andockhilfe in einem Frachtgutbereich, der mehrere Verladeplätze umfasst, wobei das System Folgendes umfasst:

   ein Senderpaar (200), das an jedem der Verladeplätze bereitgestellt ist, wobei jedes Senderpaar einen ersten Sender (201) und einen zweiten Sender (202) umfasst, die dafür angeordnet sind, ein erstes beziehungsweise ein zweites Messsignal zu senden,
   wobei das erste und das zweite Messsignal zusammen eine Führungszone (128) vor dem zugeordneten Verladeplatz definieren und eine Signalkennung umfassen, die dem Verladeplatz zugeordnet ist, und
   ein Empfängerpaar (211, 212), das an einem Lkw bereitgestellt ist,
   wobei das Empfängerpaar einen ersten und einen zweiten Empfänger umfasst, die dafür angeordnet sind, Messsignale vom Verladeplatz zu empfangen, wobei das System dafür angeordnet ist, mit Hilfe des empfangenen ersten und des empfangenen zweiten Messsignals, die eine Signalkennung aufweisen, die einem zuvor bestimmten Verladeplatz unter den mehreren Verladeplätzen zugeordnet ist, die Lkw-Position und die Lkw-Ausrichtung zu bestimmen.

**12.** System nach Anspruch 11, wobei sich die Führungszonen benachbarter Verladeplätze überschneiden.

**13.** System nach Anspruch 11 oder 12, wobei der Lkw gespeicherte Informationen umfasst, welche die Signalkennung betreffen, wobei die Informationen dem Lkw während des Zuweisens eines Verladeplatzes für den Lkw zur Verfügung gestellt werden.

**14.** System nach einem der Ansprüche 11 bis 13, ferner eine zentrale Einheit umfassend, die am Lkw angeordnet ist und die dafür angeordnet ist, basierend auf der bestimmten Lkw-Position und der bestimmten Lkw-Ausrichtung Lkw-Führungsdaten zu erzeugen.

**15.** System nach einem der Ansprüche 11 bis 14, wobei die Lkw-Position und die Lkw-Ausrichtung basierend auf einer ersten Entfernung L1 zwischen dem ersten Sender und dem ersten Empfänger, einer zweiten Entfernung L2 zwischen dem zweiten Sender und dem zweiten Empfänger, einer dritten Entfernung L3 zwischen dem ersten Sender und dem zweiten Empfänger und einer vierten Entfernung L4 zwischen dem zweiten Sender und dem ersten Empfänger bestimmt werden.

**Revendications**

**1.** Procédé permettant de fournir une assistance au quai pendant un reculement d'un camion (110) vers un emplacement de chargement (108) prédéterminé au niveau d'une zone de cargaison (100), comprenant de :

transmettre un premier (201) et un second (202) signal de mesure depuis un emplacement de chargement parmi une pluralité d'emplacements de chargement, lesdits premier et second signaux de mesure définissant conjointement une zone de guidage (128) associée à l'emplacement de chargement transmettant lesdits signaux de mesure, et lesdits premier et second signaux de mesure comprenant une identité de signal associée à l'emplacement de chargement transmettant lesdits signaux de mesure ;
recevoir lesdits premier et second signaux de mesure (211, 212) au niveau du camion ; et
à condition que l'identité de signal des signaux de mesure reçus correspond audit emplacement de chargement prédéterminé, utiliser lesdits signaux de mesure pour déterminer la position du camion et
l'orientation du camion en relation avec l'emplacement de chargement prédéterminé,
dans lequel la position du camion et l'orientation du camion sont déterminées répétitivement pendant au moins une partie dudit reculement.

**2.** Procédé selon la revendication 1, dans lequel il y a un chevauchement entre des zones de guidage associées à des emplacements de chargement adjacents parmi ladite pluralité d'emplacements de chargement.

**3.** Procédé selon une quelconque des revendications précédentes, comprenant en outre d'assigner ledit emplacement de chargement prédéterminé au camion en fournissant l'information au camion associé à l'identité de signal relative à l'emplacement de chargement prédéterminé.

**4.** Procédé selon une quelconque des revendications précédentes, dans lequel ladite transmission du premier et second signaux de mesure est effectuée avec un taux de répétition étant varié conformément à au moins une de la position de camion déterminée et l'orientation de camion déterminée.

**5.** Procédé selon la revendication 1, comprenant en outre de générer des données de guidage de camion sur la base de la position de camion déterminée et de l'orientation de camion déterminée.

**6.** Procédé selon une quelconque des revendications précédentes, dans lequel lesdites premier et second signaux de mesure comprennent une information de séquence, ladite information de séquence distinguant une paire de signaux de mesure formée par lesdits premier et second signaux de mesure d'une paire de signaux de mesure suivante associée à la même zone de guidage.

**7.** Procédé selon une quelconque des revendications précédentes, dans lequel lesdits premier et second signaux de mesure sont reçus au niveau d'un premier point de réception et un second point de réception sur ledit camion.

**8.** Procédé selon la revendication 7, dans lequel le premier et le second signaux de mesure sont transmis d'un premier point de transmission et un second point de transmission, respectivement, au niveau de l'emplacement de chargement.

**9.** Procédé selon la revendication 8, dans lequel la position du camion et l'orientation du camion sont déterminées en mesurant une première distance, L1, entre le premier point de transmission et le premier point de réception, une seconde distance, L2, entre le second point de transmission et le second point de réception, une troisième distance, L3, entre le premier point de transmission et le second point de réception, et une quatrième distance, L4, entre le second point de transmission et le premier point de réception.

10. Procédé selon une quelconque des revendications 1 à 9, dans lequel chaque emplacement de chargement de ladite pluralité d'emplacements de chargement est un entrepôt de chargement.

11. Système permettant de fournir une assistance au quai au niveau d'une zone de cargaison comprenant une pluralité d'emplacements de chargement, ledit système comprenant :

une paire d'émetteurs (200) prévu à chacun desdits emplacements de chargement, chaque paire d'émetteurs comprenant un premier émetteur (201) et un second émetteur (202) agencés afin d'émettre un premier et un second signal de mesure, respectivement,

dans lequel lesdits premier et second signaux de mesure définissent conjointement une zone de guidage (128) à l'avant de l'emplacement de chargement associé et comprennent une identité de signal associée audit emplacement de chargement, et

une paire de récepteurs (211, 212) prévue sur un camion, ladite paire de récepteurs comprenant un premier et un second récepteur agencé afin de recevoir des signaux de mesure provenant dudit emplacement de chargement, dans lequel le système étant agencé afin de déterminer la position de camion et l'orientation du camion en utilisant le premier et le second signaux de mesure reçus ayant une identité de signal associée à un emplacement de chargement prédéterminé parmi ladite pluralité d'emplacements de chargement.

12. Système selon la revendication 11, dans lequel il y a un chevauchement entre les zones de guidage d'emplacements de chargement adjacents.

13. Système selon une quelconque des revendications 11 à 12, dans lequel le camion comprend une information mémorisée relative à l'identité de signal, l'information étant fournie au camion pendant l'assignation d'un emplacement de chargement au camion.

14. Système selon une quelconque des revendications 11 à 13, comprenant en outre une unité centrale qui est disposée sur le camion et qui est disposée afin de générer des données de guidage de camion sur la base de la position de camion déterminée et l'orientation de camion déterminée.

15. Système selon une quelconque des revendications 11 à 14, dans lequel la position du camion et l'orientation du camion sont déterminées sur la base d'une distance L1 entre le premier émetteur et le premier récepteur, une distance L2 entre le second émetteur et le second récepteur, une distance L3 entre le premier émetteur et le second récepteur, et une distance L4 entre le second émetteur et le premier récepteur.

*Fig. 1*

*Fig. 2*

*Fig. 3*

Amplitude

Fig. 4a

Amplitude

Fig. 4b

| Identification block | Seq. information | Other data |
|---|---|---|

Fig. 5

*Fig. 6a*

*Fig. 6b*

100

118

116

129

108 109

102

*Fig. 6c*

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6693524 B

- WO 2008121041 A